# EUROPÄISCHE PATENTSCHRIFT

(11) **EP 0 774 343 B1**
(45) Veröffentlichungstag und Bekanntmachung des Hinweises auf die Patenterteilung: **26.02.2003**
(21) Anmeldenummer: 96118302.7
(22) Anmeldetag: 14.11.1996
(51) Int. Cl.: B32B 5/08

(54) **Mehrlagiges Formteil**
Multilayer shaped part
Pièce multicouche

(30) Priorität: 14.11.1995 DE 29518036 U
(43) Veröffentlichungstag der Anmeldung: 21.05.1997
(73) Patentinhaber: LEAR Corporation GmbH & Co. KG, 65462 Ginsheim-Gustavsburg (DE)
(72) Erfinder: Hartmann, Konrad Dipl.-Ing., 83104 Tuntenhausen (DE)
(74) Vertreter: Grünecker, Kinkeldey, Stockmair & Schwanhäusser Anwaltssozietät

(56) Entgegenhaltungen:
- EP-A- 0 417 827
- EP-A- 0 426 158
- EP-A- 0 657 281
- DE-A- 3 614 533
- GB-A- 1 559 660
- US-A- 5 286 553
- DATABASE WPI Section Ch, Week 9512 Derwent Publications Ltd., London, GB; Class A32, AN 95-084996 XP002022716 & JP-A-07 009 606 (UNITIKA LTD) , 13.Januar 1995

## Beschreibung

Die Erfindung betrifft ein Formteil, insbesondere zur Fahrzeuginnenverkleidung, aus einer Kernschicht und wenigstens einseitig auf dieser angeordneter Deckschicht, welche aus mindestens einer thermoplastischen und einer Faserschicht gebildet ist.

Solche Formteile dienen beispielsweise zur Verkleidung von Innenflächen von Fahrzeugtüren, als Seitenverkleidungen, Hutablagen oder dergleichen. Aus der DE 44 42 014 A1 ist ein solches Formteil bekannt. Das vorbekannt Formteil weist eine Kernschicht aus einem Kunststoffschaum mit gegebenenfalls eingelagerten Flocken aus verschiedenen Materialien auf. Auf dieser Kernschicht ist eine Deckschicht aufgebracht, die im wesentlichen aus einem in einem thermoplastischen Kunststoff eingebetteten Tragkörper besteht.

Da die Kernschicht bei dem vorbekannten Formteil aus Kunststoffschaum und in diesem vernetzt angeordneten Flocken besteht, ist die Herstellung und Weiterverarbeitung eines solchen Kernmaterials relativ aufwendig und arbeitsintensiv. Um beispielsweise eine Kernschicht passender Dicke herzustellen, wird diese aus einem großvolumigen Schaumstoffblock ausgeschnitten. Muß die Kernschicht bei folgenden Arbeitsgängen weiter verarbeitet und gegebenenfalls verformt werden, kann eine Dichteänderung der Kernschicht in den verformten Bereichen auftreten. Entsprechend ändern sich die charakteristischen Eigenschaften der Kernschicht an dieser Stelle. So kann beispielsweise die Wärmeisolierung oder Schalldämmung negativ beeinflußt werden. Weiterhin kann durch die Verformung die innere Struktur aus vernetzten Flocken zerstört werden, so daß sich hierdurch die charakteristischen Eigenschaften der Kernschicht, beispielsweise Festigkeit, ändern.

Ein weiterer Nachteil ist, daß die beschriebene Kernschicht relativ weich ist und sich gegebenenfalls bei zu hoher Beanspruchung plastisch verformt.

Der Erfindung liegt daher die Aufgabe zugrunde, ein Formteil der eingangs genannten Art dahingehend zu verbessern, daß dieses einfach und leicht verformbar herstellbar ist und eine hohe Steifigkeit bei gleichzeitiger Gewichtsersparnis aufweist.

Diese Aufgabe wird bei einem Formteil mit dem Kennzeichen des Oberbegriffs des Anspruchs 1 dadurch gelöst, daß die Kernschicht aus Schmelzfasern und Versteifungsfasern gebildet ist.

Durch die Herstellung der Kernschicht aus Schmelzfasern und Verstärkungsfasern kann diese und damit das Formteil in einfacher Weise in einem entsprechenden Preßwerkzeug unter Zufuhr von Wärme bleibend verformt werden. Die Schmelzfasern sind bei entsprechender Temperatur plastisch oder flüssig und gehen mit den Verstärkungsfasern eine innige Verbindung ein, wobei sie gleichzeitig nach Beendigung der Verformung durch erneutes Aushärten die erreichte Form stabilisieren. Die Deckschicht mit ihren verschiedenen Schichten wird gleichzeitig mit dem Kernmaterial erhitzt und verformt. Durch die Kombination einer solchen Kernschicht und Deckschicht mit den zugehörigen Faserschichten ergibt sich eine hohe Zugfestigkeit und damit Biegefestigkeit beziehungsweise hohe Bauteilsteifigkeit für das Formteil.

Gleichzeitig kann durch die Schmelzfasern der Kernschicht beziehungsweise die thermoplastische Schicht der Deckschicht eine optimale Verbindung von Kernschicht und Deckschicht ohne zusätzliche Verwendung einer Klebeschicht erreicht werden.

Schmelzfasern und Verstärkungsfasern der Kernschicht können auch als Fäden ausgebildet sein. Die Fasern beziehungsweise Fäden können miteinander in Form eines Gewebes, Netzes, Geflechts oder ähnlichem verbunden sein. Bevorzugt ist ein Vlies aus Schmelzfasern und Verstärkungsfasern, in dem die einzelnen Fasern, beziehungsweise Fäden in einer Wirrlage angeordnet sind.

Für die einzelnen Fasern und Fäden sind verschiedenste Materialien verwendbar, insbesondere auch Recyclingmaterialien. Einige der möglichen Materialien sind Baumwolle, Leinen, Flachs, Holz, Textilien oder weitere Fasern und Fäden aus einem im Vergleich zu den thermoplastischen Fasern höher schmelzende Materialien, wie Kevlar, Graphit, Metall, Glas oder dergleichen.

Weiterhin ist es in einigen Fällen von Vorteil, wenn aus verschiedenen der obengenannten Materialien hergestellte Verstärkungsfasern in der Kernschicht angeordnet sind.

Wird die Deckschicht nur einseitig aufgebracht, kann, um die Kernschicht bei deren Handhabung zu schützen, zumindest einseitig und gegenüberliegend zur Deckschicht auf der Kernschicht eine Entfaserungsschutzfolie aufgebracht sein.

Um die Deckschichten mit einer höheren Zugfestigkeit auszubilden, sind diese vorteilhafterweise aus einem in Thermoplastschichten eingebetteten Vlies gebildet. Durch diesen sandwichartigen Aufbau bereits der Deckschicht wird deren Zugfestigkeit und damit auch die Biegesteifigkeit des Formteils erhöht. Für die thermoplastische Schicht der Deckschicht kann ein den Schmelzfasern der Kernschicht entsprechendes Material verwendet werden. Solche Materialien sind beispielsweise Ethylen, Polyethylen, Polyamid, Polypropylen, Polyvinylchlorid, Polyimid, Polystyrol, andere thermoplastische Materialien oder Kombinationen dieser Materialien.

Das bei der Deckschicht verwendete Vlies ist in der Regel im Vergleich zum bei der Kernschicht verwendeten Vlies sehr dünn und beispielsweise aus einer Wirrlage von Fasern oder Fäden aus Glas, Graphit, Kevlar, Metall oder dergleichen gebildet.

Um die Eigenschaften des Formteils, beispielsweise dessen Steifigkeit, in einer bestimmten Richtung gegenüber den anderen Richtungen zu erhöhen, ist es günstig, wenn die Faserausrichtung in den Faserschichten von Kern- und/oder Deckschichten isotrop und/oder anisotrop ist. Auf diese Weise ist beispielsweise auch die Zugfestigkeit des Formteils gezielt veränderbar. Dabei ist selbstverständlich, daß die Faserausrichtung bei Kernschicht und Deckschicht unterschiedlich sein kann oder die Faserausrichtung in der Kernschicht isotrop und in der Deckschicht anisotrop oder umgekehrt ist. Weiterhin kann jede Schicht aus Bereichen mit isotropen und anisotropen Faserausrichtung gebildet sein.

Zur Verbesserung des optischen Eindrucks des Formteils ist auf diesem wenigstens einseitig, das heißt auf seiner Sichtoberfläche, ein Dekormaterial aufkaschiert. Dieses kann aus Teppich, Textil, Leder oder dergleichen hergestellt sein. Außerdem kann das Dekormaterial auf seiner dem Formteil zuweisenden Seite eine relativ weiche Polsterungsschicht aufweisen.

Im folgenden wird ein vorteilhaftes Ausführungsbeispiel der Erfindung anhand der beigefügten Figur näher erläutert und beschrieben.

Es zeigt:

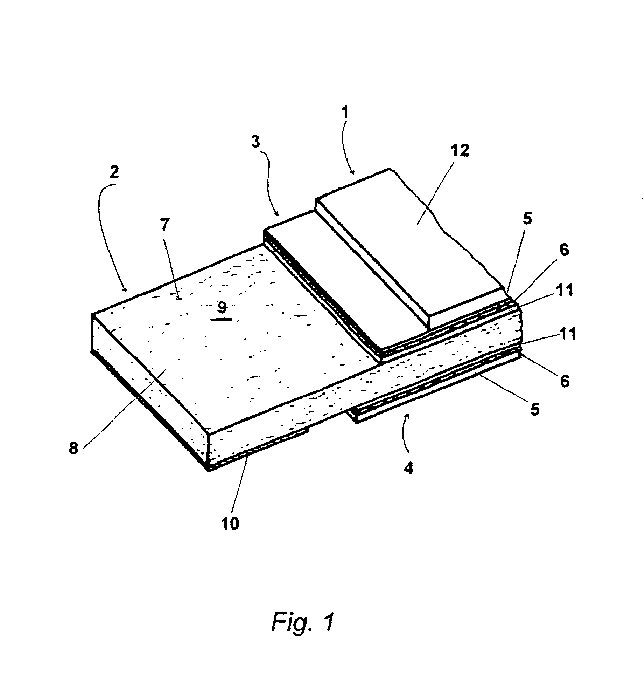

- Figur 1: ein erfindungsgemäßes Formteil in perspektivischer Ansicht in geschnittener und stark vergrößerter, vereinfachter Darstellung.

Figur 1 zeigt ein Formteil 1. Dieses ist nur im Prinzip dargestellt, wobei entsprechende, verformte Abschnitte des Formteils zur Vereinfachung nicht dargestellt sind. Außerdem bedecken die verschiedenen, im weiteren erläuterten Schichten in der Regel eine Kernschicht 2 des Formteils 1 beidseitig, wobei die entsprechenden Schichten auch in den Randbereichen der Kernschicht aufgetragen sein können.

Das Formteil 1 ist außer aus der Kernschicht 2 aus einer oberen und einer unteren Deckschicht 3 und 4 und einem auf der oberen Deckschicht 3 aufkaschiertem Dekormaterial 12 gebildet. Dieses ist in der Regel nur auf der Sichtoberfläche des Formteils 1 angeordnet.

Die Kernschicht 2 ist aus einem Vlies 9 aus einer Wirrlage von Schmelzfasern 7 und Verstärkungsfaser 8 gebildet. Die verschiedenen Fasern sind bei dem dargestellten Ausführungsbeispiel anisotrop in der Ebene des Vlieses 9 ausgerichtet.

Auf einer Unterseite der Kernschicht 2 ist zumindest teilweise eine Entfaserungsschutzschicht 10 angeordnet. Diese kann auf der gesamten Unterseite der Kernschicht angeordnet sein, wobei sie sich zwischen dieser und der unteren Deckschicht 4 erstreckt.

Eine entsprechende Entfaserungsschutzschicht kann auch auf der Oberseite der Kernschicht 2 angeordnet werden.

Das Formteil 1 weist einen sandwichartigen Aufbau auf, wobei es zumindest aus oberer und unterer Deckschicht 3, 4 und Kernschicht 2 gebildet ist. Der sandwichartige Aufbau wird dadurch verstärkt, daß die Deckschichten 3, 4 selbst sandwichartig aufgebaut sind.

Jede der Deckschichten 3, 4 kann eine Faserschicht 6 und zwei diese einbettende thermoplastische Schicht 5, 11 aufweisen.

Die Dicke der Deckschichten 3, 4 ist in der Regel wesentlich geringer als die Dicke der Kernschicht 2. Zur Verbindung von Kernschicht 2 mit Deckschicht 3 oder 4 und von Dekormaterial 12 mit Deckschicht 3, sind die verschiedenen thermoplastischen Schichten 5, 11, beziehungsweise die Schmelzfasern 7 verwendbar. Eine separate Klebemittelschicht zwischen den einzelnen Schichten ist nicht erforderlich.

Im folgenden wird kurz die Herstellung des erfindungsgemäßen Formteils 1 nach Figur 1 beschrieben.

Kernschicht 2 und die verschiedenen schichten 5, 6, 11 der Deckschichten 3 und 4 werden aufeinandergelegt und mittels einer Kontaktheizung erwärmt. Das auf diese Weise erwärmte Material wird in einem Preßwerkzeug verformt und gleichzeitig mit dem Dekormaterial 12 kaschiert.

Durch die Einbettung der Faserschicht 6 in die thermoplastischen Schichten 5 und 11 bei den Deckschichten weisen diese eine hohe Zugfestigkeit auf, die mitentscheidend für die Biegefestigkeit des Formteils 1 ist. Die Dicke und damit auch die Dichte der Kernschicht 2 wird durch den Spalt des Preßwerkzeuges bestimmt.

Durch die Verwendung der beschriebenen Schichten für das erfindungsgemäße Formteil ergibt sich ein Formteil mit hoher Biegefestigkeit, beziehungsweise Bauteilsteifigkeit, wobei gleichzeitig eine erhebliche Gewichtsersparnis im Vergleich zu bekannten Formteilen auftritt.

## Patentansprüche

1. Formteil (1), insbesondere zur Fahrzeuginnenverkleidung, aus einer Kernschicht (2) und wenigstens einseitig auf dieser angeordneter Deckschicht (3, 4), welche aus mindestens einer thermoplastischen und einer Faserschicht (5, 11; 6) gebildet ist,
**dadurch gekennzeichnet,**
**daß** die Kernschicht (2) aus Schmelzfasern (7) und Verstärkungsfasern (8) gebildet ist.

2. Formteil nach Anspruch 1,
**dadurch gekennzeichnet,**
**daß** Schmelzfasern (7) und Verstärkungsfasern (8) ein Vlies (9) bilden.

3. Formteil nach Anspruch 1 oder 2,
**dadurch gekennzeichnet,**
**daß** die Schmelzfasern (7) aus Ethylen, Polyethylen, Polyamid, Polypropylen, Polyvinylchlorid, Polystyrol, Polyimid oder einem anderen thermoplastischen Material oder einer Kombination dieser Materialien gebildet sind.

4. Formteil nach wenigstens einem der vorangehenden Ansprüche,
**dadurch gekennzeichnet,**
**daß** die Verstärkungsfasern Kunststoff-, Natur-, Glas-, Metallfasern oder eine Kombination dieser Fasern sind.

5. Formteil nach wenigsens einem der vorangehenden Ansprüche,
**dadurch gekennzeichnet,**
**daß** die Deckschicht (3, 4) aus einem in thermoplastischen Schichten (5, 11) eingebetteten Vlies (6) gebildet ist.

6. Formteil nach wenigstens einem der vorangehenden Ansprüche,
**dadurch gekennzeichnet,**
**daß** das Formteil (1) wenigstens einseitig mit einem Dekormaterial (12) kaschiert ist.

7. Formteil nach wenigstens einem der vorangehenden Ansprüche,
**dadurch gekennzeichnet,**
**daß** eine Faserausrichtung der Fasern in den Faserschichten (6, 8) von Kern- und/oder Deckschicht (2, 3, 4) isotrop und/oder anisotrop ist.

## Claims

1. A moulding (1), in particular for vehicle interior trim, comprising a core layer (2) and an outer layer (3, 4) arranged on at least one side thereof, which outer layer (3, 4) is formed of at least one thermoplastic and one fibre layer (5, 11; 6),
**characterised in that**
the core layer (2) is formed of melt fibres (7) and reinforcing fibres (8).

2. A moulding according to claim 1,
**characterised in that**
melt fibres (7) and reinforcing fibres (8) form a nonwoven (9).

3. A moulding according to claim 1 or claim 2,
**characterised in that**
the melt fibres (7) consist of ethylene, polyethylene, polyamide, polypropylene, polyvinyl chloride, polystyrene, polyimide or another thermoplastic material or a combination of these materials.

4. A moulding according to at least one of the preceding claims,
**characterised in that**
the reinforcing fibres are plastics, natural, glass or metal fibres or a combination of these fibres.

5. A moulding according to at least one of the preceding claims,
**characterised in that**
the outer layer (3, 4) takes the form of a nonwoven (6) embedded in thermoplastic layers (5, 11).

6. A moulding according to at least one of the preceding claims,
**characterised in that**
the moulding (1) is laminated at least on one side with a decorative material (12).

7. A moulding according to at least one of the preceding claims,
**characterised in that**
the fibres in the fibre layers (6, 8) of core and/or outer layer (2, 3, 4) are oriented isotropically and/or anisotropically.

## Revendications

1. Pièce moulée (1) en particulier pour habillage intérieur de véhicule-composée d'une couche de noyau (2) et d'au moins une couche de couverture (3, 4) disposée d'un seul côté sur celle-ci, laquelle est constituée d'au moins une couche thermoplastique et d'une couche de fibres (5, 11; 6),
**caractérisée en ce**
**que** la couche de noyau (2) est constituée de fibres fondues (7) et de fibres de renfort (8).

2. Pièce moulée selon la revendication 1,
**caractérisée en ce**
**que** des fibres fondues (7) et des fibres de renfort (8) constituent un feutre (9).

3. Pièce moulée selon la revendication 1 ou 2,
**caractérisée en ce**
**que** les fibres fondues (7) sont constituées d'éthylène, de polyéthylène, de polyamide, de polypropylène, de chlorure de polyvinyle, de polystyrène, de polyimide ou d'un autre matériau thermoplastique ou d'une combinaison de ces matériaux.

4. Pièce moulée selon au moins l'une des revendications précédentes,
**caractérisée en ce**
**que** les fibres de renfort sont des fibres de matière plastique, des fibres naturelles, des fibres de verre, des fibres métalliques ou une combinaison de ces fibres.

5. Pièce moulée selon au moins l'une des revendications précédentes,
**caractérisée en ce**
**que** la couche de couverture (3, 4) est constituée d'un feutre (6) noyé dans des couches (5, 11) thermoplastiques.

6. Pièce moulée selon au moins l'une des revendications précédentes,
**caractérisée en ce**
**que** la pièce moulée (1) est revêtue au moins d'un côté d'un matériau décoratif (12).

7. Pièce moulée selon au moins l'une des revendications précédentes,
**caractérisée en ce**
**qu'**une orientation des fibres dans les couches de fibres (6, 8) des couches de noyau et/ou de couverture (2, 3, 4) est isotrope et/ou anisotrope.
